# EUROPÄISCHE PATENTSCHRIFT

(11) **EP 3 755 516 B1**
(45) Veröffentlichungstag und Bekanntmachung des Hinweises auf die Patenterteilung: **24.07.2024**
(21) Anmeldenummer: 19704773.1
(22) Anmeldetag: 08.02.2019
(51) Int. Cl.: B29C 45/14, B29C 45/00, B62D 29/04

(54) **STRUKTURBAUTEIL MIT MEHREREN ORGANOBLECHSTÜCKEN UND VERFAHREN ZU DESSEN HERSTELLUNG**
STRUCTURAL COMPONENT HAVING A PLURALITY OF ORGANIC SHEET PIECES, AND METHOD FOR THE PRODUCTION THEREOF
ÉLÉMENT STRUCTURAL COMPRENANT PLUSIEURS PLAQUES DE COMPOSITE THERMOPLASTIQUE RENFORCÉ DE FIBRES ET SON PROCÉDÉ DE FABRICATION

(30) Priorität: 19.02.2018 DE 102018202475
(43) Veröffentlichungstag der Anmeldung: 30.12.2020
(73) Patentinhaber: Brose Fahrzeugteile SE & Co. Kommanditgesellschaft, Bamberg, 96052 Bamberg (DE)
(72) Erfinder: THIENEL, Michael, 95349 Thurnau (DE)
(74) Vertreter: Maikowski & Ninnemann Patentanwälte Partnerschaft mbB
(86) Internationale Anmeldenummer: PCT/EP2019/053079
(87) Internationale Veröffentlichungsnummer: WO 2019/158436

(56) Entgegenhaltungen:
- EP-A1- 3 009 249
- DE-A1- 10 341 134
- DE-B4- 10 341 134
- US-A1- 2011 031 643
- US-A1- 2016 107 348

## Beschreibung

Die vorliegende Erfindung betrifft ein Strukturbauteil nach Anspruch 1 und ein Verfahren zur Herstellung eines Strukturbauteils nach Anspruch 8.

Strukturbauteile können insbesondere im Automobilbereich z.B. eine tragende und/oder strukturgebende Funktion aufweisen. Die möglichen Einsatzorte sind vielfältig; beispielhaft genannt seien Teile von Sitzgestellen, Türen und der Karosserie.

Aus der DE 10 2013 213 711 A1 ist es bekannt, ein Strukturbauteil aus einem Organoblech herzustellen. Dabei wird ein Organoblechstück zur Herstellung des Strukturbauteils einem Warmumformungsprozess unterzogen.

Die EP 3 009 249 A1 beschreibt ein Verfahren zum Herstellen eines Hybrid-Verbundbauteils aus Organoblechen und einem metallischen Verstärkungselement.

In der DE 103 41 134 A1 ist eine Nietverbindung auf Kunststoffbasis zur Verbindung von Bauteilen über mindestens ein Nietloch beschrieben. Weitere Strukturbauteile sind in der US 2011/031643 A1 beschrieben.

Als Organobleche werden plattenförmige Werkstoffe (Halbzeuge) aus einem faserverstärkten, insbesondere endlosfaserverstärkten, thermoplastischen Kunststoff bezeichnet. Die (Endlos-)Fasern können in Form von Gelegen, Geweben oder Gestricken, z.B. aus Glas-, Kevlar-, Kohle- oder Kunststofffasern in eine thermoplastische Matrix eingebettet sein. Organobleche stellen somit thermoformbare (warmumformbare) Verbundwerkstoffe dar. Als Matrixmaterialien eignen sich z.B. Polyolefine, insbesondere Polypropylen, sowie Plexiglas, Polycarbonat, Polystyrol und/oder Polyamid. Bei einem Anspritzen des Organoblechs mit Kunststoffmaterial kann die thermoplastische Matrix anschmelzen, wodurch eine stoffschlüssige Verbindung mit dem angespritzten Kunststoffmaterial entstehen kann. Daher stellen Organobleche äußerst vielseitige Werkstoffe dar, mit denen es möglich ist, Strukturbauteile mit niedrigem Gewicht bei einer großen Stabilität herzustellen.

Der Anmelderin ist es intern aus der Praxis bekannt, Strukturbauteile aus mehreren Organoblechstücken herzustellen. Damit die einzelnen Organoblechstücke im fertigen Strukturbauteil sicher aneinander befestigt sind, werden die Organoblechstücke für gewöhnlich mit einem relativ großen Überlapp aneinander gelegt und warm verpresst. Damit die Organoblechstücke sicher aneinander halten, ist es notwendig, vergleichsweise große Überlappbereiche vorzusehen. Für die Stabilität des Strukturbauteils sind solche großen Überlappbereiche jedoch oftmals nicht notwendig. Da die Herstellung von Organoblech sehr aufwendig ist, ist jedoch dessen effizienter Einsatz am Strukturbauteil wünschenswert. Zudem hat es sich gezeigt, dass das Warmverpressen der Organoblechstücke innerhalb eines relativ kleinen optimalen Temperaturfensters erfolgen muss. Die exakte Überwachung der Temperatur kann das Herstellungsverfahren somit vergleichsweise aufwendig machen.

Aufgabe der vorliegenden Erfindung ist es, ein Strukturbauteil bereitzustellen, das einen möglichst effizienten Einsatz von Organoblech erlaubt.

Diese Aufgabe wird gelöst durch ein Strukturbauteil nach Anspruch 1.

Ein solches Strukturbauteil, insbesondere für ein Kraftfahrzeug, umfasst zwei oder mehr Organoblechstücke, die zumindest abschnittsweise übereinanderliegen, insbesondere flächig aneinander anliegen. Die Organoblechstücke weisen jeweils eine Faserschicht auf. Zumindest in den Faserschichten der Organoblechstücke ist ein Paar oder sind mehrere Paare von jeweils miteinander fluchtenden Löchern ausgebildet, an (und mittels) denen die Organoblechstücke aneinander befestigt sind, und zwar zumindest durch eine formschlüssige Verbindung, und zwar durch einen Formschluss der Organoblechstücke miteinander. Das eine Loch eines Paars von miteinander fluchtenden Löchern ist an dem einen Organoblechstück ausgebildet, während das andere Loch des Paars an dem anderen Organoblechstück ausgebildet ist.

Auf diese Weise können die zwei oder mehr Organoblechstücke (die auch als Organopatches bezeichnet werden können) besonders sicher und mit einem besonders geringen Überlapp aneinander befestigt sein. Denn die formschlüssige Befestigung der Organoblechstücke an den miteinander fluchtenden (z.B. in Deckung zueinander angeordneten) Löchern ermöglicht eine besonders sichere Befestigung der Organoblechstücke aneinander. Hierdurch kann ein besonders effizienter Materialeinsatz von Organoblech erreicht werden. Die Befestigung der Organoblechstücke aneinander ist insbesondere in Form einer unlösbaren Verbindung ausgeführt. Beispielsweise hintergreift ein Abschnitt des einen Organoblechstücks das andere Organoblechstück an dem darin ausgebildeten Loch.

Die einzelnen Organoblechstücke können z.B. jeweils als Organoblechzuschnitt ausgebildet sein, beispielsweise aus einer größeren Organoblechplatte ausgeschnitten oder ausgestanzt sein. Beim Herstellen von Organoblechzuschnitten ist es wünschenswert, einen geringen Verschnitt zu erzeugen, um einen möglichst effizienten Einsatz von Organoblech zu erreichen. Das vorgeschlagene Strukturbauteil ermöglicht es, auch kleinere Organoblechstücke, die bislang unter Umständen als Verschnitt verloren gegangen wären, beim Strukturbauteil vorzusehen.

Zudem ermöglicht das vorgeschlagene Strukturbauteil, stärker beanspruchte Bereiche des Strukturbauteils z.B. mit einem stärker belastbaren (z.B. dickeren und/oder mit einer dickeren Faserschicht versehenen) Organoblechstück auszubilden, und zwar insbesondere auch dann, wenn diese Bereiche vergleichsweise klein sind. Auch hierdurch wird ein besonders effizienter Einsatz von Organoblech ermöglicht.

Die Organoblechstücke können endlosfaserverstärkte Organoblechstücke sein. Unter der Bezeichnung "endlosfaserverstärkt" ist zu verstehen, dass die Länge der zur Verstärkung dienenden Fasern im Wesentlichen durch die Größe der (zumindest vor einem Umformprozess) plattenförmigen Organoblechstücke begrenzt ist. So kann vorgesehen sein, dass innerhalb der Ränder des endlosfaserverstärkten Organoblechstücks eine Faser im Wesentlichen nicht unterbrochen ist.

Die formschlüssige Verbindung ist zwischen den Faserschichten der Organoblechstücke ausgebildet. Beispielsweise erstreckt sich ein Organoblech mit dessen Faserschicht, z.B. mit einem Rand des Lochs, in das Loch im anderen Organoblechstück hinein, um so eine formschlüssige Verbindung aufzubauen. Auch können die Faserschichten im Bereich der fluchtenden Löcher zumindest teilweise ineinander geschoben oder vermischt sein, sodass ein Formschluss zwischen einzelnen Fasern vorliegt. Durch einen Formschluss zwischen den Faserschichten ist eine besonders sichere Verbindung der Organoblechstücke möglich.

Alternativ oder zusätzlich kann sich eine Füllung durch das mindestens eine Paar von miteinander fluchtenden Löchern hindurch erstrecken. Die Füllung kann stoffschlüssig mit der thermoplastischen Matrix von einem oder beiden Organoblechstücken verbunden sein (und so eine stoffschlüssige Verbindung zwischen den Organoblechstücken herstellen). Die Füllung erlaubt eine besonders sichere Verbindung der Organoblechstücke. Die Füllung kann beispielsweise aus einem Spritzgussmaterial bestehen, insbesondere einem faserverstärkten (z.B. langglasfaserverstärkten) Spritzgussmaterial. Mit anderen Worten gesagt können die Organoblechstücke mittels Spritzgussmaterial miteinander vernäht sein.

Die Füllung umfasst z.B. dasselbe Material oder besteht aus demselben Material wie die Matrix zumindest eines der Organoblechstücke. Insbesondere kann es dasselbe Material wie die Matrix umfassen und zusätzlich mit Fasern verstärkt sein. Hierdurch ist eine besonders sichere stoffschlüssige (ggf. zusätzlich faserverstärkte) Verbindung der Organoblechstücke möglich.

Die Füllung erstreckt sich insbesondere durch das Paar (oder die Paare) der miteinander fluchtenden Löcher hindurch. Auf einer Seite oder beiderseits der einander überlappenden Organoblechstücke kann die Füllung einstückig (insbesondere materialeinheitlich) mit jeweils einem Halteteil ausgebildet sein. Die Halteteile weisen jeweils einen größeren Durchmesser auf, als die miteinander fluchtenden Löcher. Auf diese Weise ist eine besonders sichere formschlüssige Verbindung der Organoblechstücke möglich.

In einer Ausführungsform ist eine Vielzahl von Paaren von miteinander fluchtenden Löchern vorgesehen, die jeweils zumindest in den Faserschichten der Organoblechstücke ausgebildet sind. Beispielsweise sind mehr als fünf, mehr als zehn oder mehr als 20 Paare von miteinander fluchtenden Löchern vorgesehen. Hierdurch ist eine besonders sichere Befestigung der Organoblechstücke aneinander auch auf einem kleinen Überlappbereich möglich. Zudem können dann die einzelnen Löcher mit einem geringen Durchmesser ausgebildet sein.

Zwischen zumindest zwei Paaren von miteinander fluchtenden Löchern, die jeweils zumindest in den Faserschichten der einander überlappenden Organoblechstücke eingebracht sind, kann eine Verstärkungsrippe ausgebildet sein. Insbesondere erstreckt sich die Verstärkungsrippe entlang zumindest eines der Organoblechstücke von dem einen Paar zum anderen Paar. Die Verstärkungsrippe kann insbesondere einstückig mit Füllungen der zumindest zwei Paare von miteinander fluchtenden Löchern ausgebildet sein. Hierdurch können zum einen die Füllungen in ihrer Lage gesichert werden. Zum anderen bieten die Löcher eine besonders sichere (z.B. materialeinheitliche) Befestigungsstelle der Verstärkungsrippe.

Zwischen zumindest zwei Paaren von miteinander fluchtenden Löchern kann beiderseits der übereinanderliegen Organoblechstücke jeweils zumindest eine Verstärkungsrippe ausgebildet sein. Hierdurch wird eine besonders stabile Verstärkung des Strukturbauteils erzielt werden. Die Verstärkungsrippen können z.B. über die Füllungen der Paare der miteinander fluchtenden Löcher einstückig (insbesondere materialeinheitlich) miteinander verbunden sein.

Die oben genannte Aufgabe wird auch gelöst durch ein Verfahren mit den Merkmalen des Anspruchs 8.

Danach wird ein Verfahren zur Herstellung eines Strukturbauteils vorgeschlagen, das die folgenden Schritte umfasst:
- Bereitstellen von zwei oder mehr Organoblechstücken, insbesondere in Form von Organoblechzuschnitten (das Bereitstellen kann das Zuschneiden einer Organoblechplatte zur Bildung von einem oder mehreren der Organoblechstücke umfassen);
- Anordnen der Organoblechstücke derart, dass sie abschnittsweise oder zumindest abschnittsweise übereinanderliegen, insbesondere flächig aneinander anliegen; und
- Einbringen, insbesondere Durchstechen, zumindest eines sich durch die zwei Organoblechstücke hindurch erstreckenden Durchgangslochs in die (übereinanderliegenden) Organoblechstücke und Ausbilden einer formschlüssigen Verbindung der Organoblechstücke durch einen Formschluss der Organoblechstücke miteinander am Durchgangsloch.

Das Ausbilden der formschlüssigen Verbindung der Organoblechstücke kann eine Folge des Einbringens des Durchgangslochs sein, z.B. indem durch ein Durchstechen Materialabschnitte beider Organoblechstücke miteinander in Eingriff gebracht werden.

Die insbesondere unlösbare Befestigung der Organoblechstücke am Durchgangsloch ermöglicht eine besonders sichere Befestigung der Organoblechstücke aneinander, sodass die Organoblechstücke mit einem besonders geringen Überlapp angeordnet werden können. Hierdurch wird ein effizienter Materialeinsatz von Organoblech ermöglicht.

Die Schritte des Anordnens der Organoblechstücke, des Einbringens des Durchgangslochs und des Befestigens der Organoblechstücke aneinander können in demselben Werkzeug erfolgen, insbesondere in einem Spritzgusswerkzeug.

Vor oder nach dem Einbringen des Durchgangslochs können die Organoblechstücke umgeformt werden. Optional werden die Organoblechstücke vor dem Einsetzen in das Spritzgusswerkzeug oder im Spritzgusswerkzeug erwärmt und beim Schließen des Spritzgusswerkzeugs umgeformt. Alternativ oder zusätzlich zum Umformen können die Organoblechstücke auch miteinander verpresst werden, was eine zusätzliche flächige Haftung aneinander ermöglicht.

Das zumindest eine sich durch die zwei Organoblechstücke hindurch erstreckende Durchgangsloch kann in einem erwärmten Zustand der Organoblechstücke eingebracht werden. Durch das Erwärmen der Organoblechstücke ist die Matrix jedes der Organoblechstücke plastisch verformbar.

Optional wird das Durchgangsloch mittels zumindest eines Dorns, z.B. in Form einer Nadel, (gemeinsam) in die (übereinanderliegenden) Organoblechstücke eingebracht. Der Dorn kann am Spritzgusswerkzeug angebracht sein. Durch Einstechen des Dorns in die zuvor erwärmten Organoblechstücke ist es möglich, ein Loch einzubringen, ohne die Fasern zu durchtrennen. Zum Beispiel können die Fasern der Faserschichten der Organoblechstücke beiseitegeschoben werden. Hierbei können sich die Faserschichten ineinander verhaken und/oder formschlüssig hintergreifen. Mit dem Dorn oder der Nadel können die Organoblechstücke also miteinander vernadelt werden.

Optional wird ein Spritzgussmaterial an die Organoblechstücke angespritzt (im Spritzgusswerkzeug), wobei das zumindest eine sich durch die Organoblechstücke hindurch erstreckende Durchgangsloch mit einer Füllung aus Spritzgussmaterial aufgefüllt wird und/oder Verstärkungsrippen oder sonstige Funktionselemente angespritzt werden. Die Verstärkungsrippen und die Füllung können als ein durchgehender Spritzgussabschnitt an die Organobleche angespritzt werden.

Bevorzugt werden zumindest zwei, insbesondere mehr, sich jeweils durch die Organoblechstücke hindurch erstreckende Durchgangslöcher in die Organoblechstücke eingebracht, was eine besonders sichere Befestigung ermöglicht.

Zumindest eine Verstärkungsrippe kann so an die Organoblechstücke angespritzt werden, dass sie die zumindest zwei Durchgangslöcher (und insbesondere die darin eingebrachten Füllungen) miteinander verbindet.

Das Verfahren kann insbesondere zur Herstellung eines Strukturbauteils nach einer beliebigen hierin beschriebenen Ausgestaltung ausgebildet sein. Hinsichtlich der jeweiligen Vorteile der einzelnen Ausführungen wird auf die entsprechende vor- und nachstehende Beschreibung Bezug genommen.

Der der Erfindung zugrunde liegende Gedanke soll nachfolgend anhand der in den Figuren dargestellten Ausführungsbeispiele näher erläutert werden. Es zeigen:
- Fig. 1A bis 1C: schematische Querschnittsansichten von zwei Organoblechstücken, die mit einem Dorn gemeinsam gelocht und miteinander verbunden werden;
- Fig. 2A bis 2D: schematische Draufsichten auf zwei Organoblechstücke in verschiedenen Stadien der Herstellung eines Strukturbauteils;
- Fig. 3: eine perspektivische Ansicht auf drei Organoblechstücke zur Herstellung eines Strukturbauteils für eine Fahrzeugtür;
- Fig. 4A und 4B: Draufsichten auf zwei Seiten einer teilweise übereinanderliegenden Anordnung der drei Organoblechstücke gemäß Fig. 3;
- Fig. 5A und 5B: Draufsichten auf zwei Seiten eines mit der Anordnung gemäß Fig. 4A und 4B hergestellten Strukturbauteils;
- Fig. 5C und 5D: perspektivische Ansichten auf zwei Seiten des Strukturbauteils gemäß Fig. 5A und 5B; und
- Fig. 6A und 6B: Draufsichten auf zwei Seiten eines Fahrzeugtür-Innenblechs mit dem Strukturbauteil gemäß Fig. 6A und 6B.

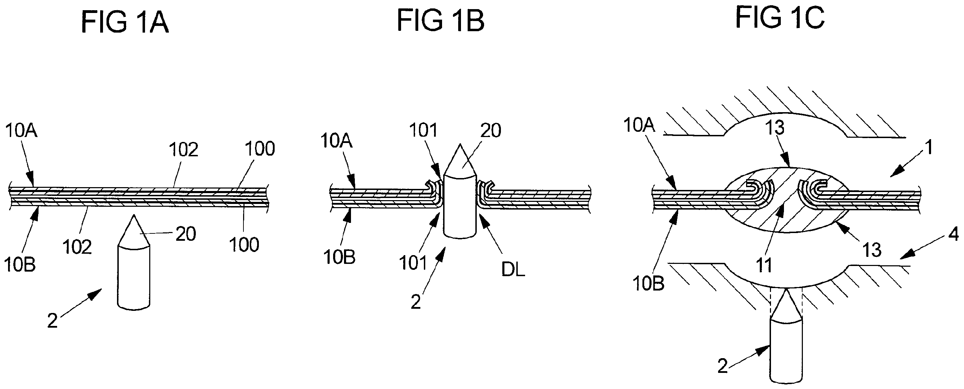

Fig. 1A zeigt zwei Organoblechstücke 10A und 10B, die im in Fig. 1A dargestellten Bereich übereinanderliegen, vorliegend in flächiger Anlage. Die Organoblechstücke 10A, 10B umfassen jeweils eine Faserschicht 100 in Form einer Fasermatte, z.B. als Gelege oder Gewebe. Die Faserschicht 100 ist jeweils in eine Matrix 102 aus einem thermoplastischen Kunststoffmaterial eingebettet. Die Organoblechstücke 10A, 10B sind insbesondere jeweils aus einem thermoplastischen Glasfasergewebe oder -gelege hergestellt.

Fig. 1A zeigt ferner einen Dorn 2 mit einer Spitze 20 benachbart zu den Organoblechstücke 10A, 10B. Beispielsweise sind die Organoblechstücke 10A, 10B in ein Werkzeug, z.B. ein Spritzgusswerkzeug eingespannt. Der Dorn 2 kann am Spritzgusswerkzeug gelagert, z.B. verschiebbar gelagert sein. Der Dorn 2 hat beispielsweise einen Durchmesser von 3 bis 4 mm.

Fig. 1B zeigt die Organoblechstücke 10A, 10B gemäß Fig. 1A, nachdem der Dorn 2 senkrecht zur Oberfläche der Organoblechstücke 10A, 10B verschoben worden ist und somit Löcher 101 (mit dem Durchmesser des Dorns 2) in die Organoblechstücke 10A, 10B gestochen hat. Mittels des Dorns werden die Organoblechstücke 10A, 10B somit (insbesondere gemeinsam) durchstochen oder gelocht.

Die Löcher 101 der beiden Organoblechstücke 10A, 10B sind koaxial zueinander ausgerichtet. Die Löcher 101 liegen in Deckung zueinander, sind also miteinander fluchtend angeordnet. Gemeinsam bilden die Löcher ein Durchgangsloch DL durch beide Organoblechstücke 10A, 10B hindurch.

Das Durchstechen der Organoblechstücke 10A, 10B kann insbesondere nach einem Erwärmen der Organoblechstücke 10A, 10B erfolgen. Im Bereich der Löcher 101 sind Fasern der Faserschichten 100 der Organoblechstücke 10A, 10B durch die Spitze 20 des Dorns 2 zur Seite geschoben worden. Durch das (gemeinsame) Einstechen der Löcher 101 umgreifen die Organoblechstücke 10A, 10B einander im Bereich der Löcher 101. Zwischen den (vernadelten) Organoblechstücken 10A, 10B liegt ein Formschluss vor, durch den die Organoblechstücke 10A, 10B aneinander befestigt sind.

Die aneinander befestigten Organoblechstücke 10A, 10B bilden ein Strukturbauteil 1. Bei dem Strukturbauteil 1 handelt es sich z.B. um ein Verkleidungsteil oder ein Karosserieteil eines Kraftfahrzeugs.

Nach dem Durchstechen der Organoblechstücke 10A, 10B mittels des Dorns 2 wird der Dorn 2 wieder aus dem Durchgangsloch DL herausgezogen. Daraufhin wird eine Füllung in das Durchgangsloch DL eingebracht, z.B. mittels Spritzguss eingespritzt.

Das Durchgangsloch DL dient als Fließkanal für Spritzgussmaterial.

Fig. 1C zeigt die Organoblechstücke 10A, 10B nach dem Einbringen der Füllung 11 in das Durchgangsloch DL, d.h. in beide Löcher 101 der Organoblechstücke 10A, 10B. Die Füllung 11 sichert die Organoblechstücke 10A, 10B im Bereich der Löcher 101 in der formschlüssigen Lage.

Ferner ist nicht nur das Innere des Durchgangslochs DL mit der Füllung 11 ausgefüllt. Zusätzlich ist das Material der Füllung 11 beiderseits der aneinander liegenden Organoblechstücke 10A, 10B über die Ränder der Löcher 101 hinaus erweitert. Hierdurch ist beiderseits der Organoblechstücke 10A, 10B ein Halteteil 13 ausgebildet, welches eine besonders sichere formschlüssige Verbindung der Organoblechstücke 10A, 10B am Durchgangsloch DL bereitstellt.

Fig. 1C zeigt ferner schematisch ein (geöffnetes) Spritzgusswerkzeug 4 zum Anspritzen des Spritzgussmaterials und optional zum Umformen der Organoblechstücke 10A, 10B, an dem der Dorn 2 verschiebbar gelagert ist.

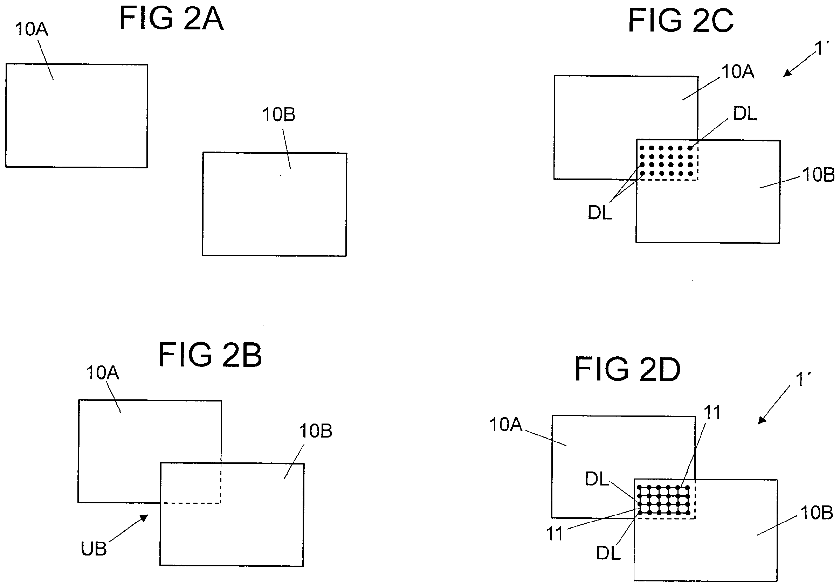

Mit Bezug auf Fig. 2A bis 2D wird nun das Verfahren zur Herstellung eines mehrfach vernadelten Strukturbauteils 1' näher erläutert werden.

In einem ersten Schritt werden die zwei Organoblechstücke 10A, 10B (auch als Organopatches zu bezeichnen) bereitgestellt, siehe Fig. 2A, was z.B. ein Zuschneiden (z.B. Ausstanzen) aus einer größeren Organoblechplatte umfassen kann. Beide Organoblechstücke 10A, 10B sind jeweils flach und eben, wobei es auch möglich ist, nicht ebene Organoblechstücke in der hier beschriebenen Weise zu verbinden. Bevorzugt werden das Lochen, ein Umformen und ein Spritzgießen in demselben Werkzeug durchgeführt.

In einem weiteren Schritt werden die Organoblechstücke 10A, 10B derart angeordnet, dass sie abschnittsweise übereinanderliegen, siehe Fig. 2B. Vorliegend liegen die Organoblechstücke 10A, 10B in einem Überlappungsbereich UB übereinander, konkret in flächiger Anlage. Das abschnittsweise übereinanderliegende Anordnen der Organoblechstücke 10A, 10B kann insbesondere durch Platzieren der Organoblechstücke 10A, 10B im Werkzeug, z.B. dem Spritzgusswerkzeug erfolgen.

In einem weiteren Schritt wird eine Vielzahl von Durchgangslöcher DL durch beide Organoblechstücke 10A, 10B hindurch eingebracht, siehe Fig. 2C. Das Einbringen jedes der Durchgangslöcher DL kann erfolgen wie im Zusammenhang mit Fig. 1A und 1B für ein einzelnes Durchgangsloch DL im Detail erläutert.

Dabei ist es einerseits möglich, mehrere oder sämtliche Durchgangslöcher DL (nacheinander) mit demselben Dorn 2 einzubringen. Andererseits kann auch für jedes zu stechende Durchgangsloch DL ein eigener Dorn 2 bereitgestellt werden, sodass sämtliche Durchgangslöcher DL gleichzeitig gestochen werden können.

Im Beispiel gemäß Fig. 2C ist ein Raster, genauer eine Matrix, von mehreren Reihen und Spalten von Durchgangslöchern DL in die Organoblechstücke 10A, 10B eingebracht.

Durch das Lochen oder Vernadeln der Organoblechstücke 10A, 10B werden diese bereits aneinander befestigt und bilden gemeinsam das Strukturbauteil 1'.

In einem nächsten Schritt werden Verrippungen, nämlich Versteifungsrippen 11, durch die genadelten Durchgangslöcher DL gespritzt, konkret durch Anspritzen mit dem Spritzgusswerkzeug, siehe Fig. 2D.

Als Spritzgussmaterial kann z.B. ein langfaserverstärktes Material eingesetzt werden, insbesondere ein langglasfaserverstärktes Spritzgussmaterial.

Die Versteifungsrippen 11 gemäß Fig. 2D dienen als Halteteile (wie die Halteteile 13 gemäß Fig. 1C). Zusätzlich versteifen die Versteifungsrippen 11 das Strukturbauteil 1', z.B. gegen Torsionen.

Im Beispiel gemäß Fig. 2D ist jedes Durchgangsloch DL mit wenigstens zwei benachbarten Durchgangslöchern DL mittels der Versteifungsrippen 11 verbunden. Vorliegend erstreckt sich eine Schar zueinander paralleler Versteifungsrippen 11 über mehrere Durchgangslöcher DL hinweg. Eine weitere Schar von zueinander parallelen Versteifungsrippen 11 erstreckt sich senkrecht zur erstgenannten Schar von Versteifungsrippen 11.

Durch Durchspritzen der Durchgangslöcher DL wird den angespritzten Versteifungsrippen 11 eine besonders gute Stabilität verliehen.

Optional können Versteifungsrippen 11 auf beiden Seiten der miteinander verbundenen Organoblechstücke 10A, 10B ausgebildet sein (angespritzt werden), was die Stabilität des Strukturbauteils 1' weiter erhöhen kann.

Das Anspritzen der Organoblechstücke 10A, 10B durch die genadelten Durchgangslöcher DL kann auch als "Spritznähen" bezeichnet werden. Denn es hat einen ähnlichen Effekt wie ein Vernähen, z.B. mittels eines Fadens. Das durch die Durchgangslöcher DL gespritzte Spritzgussmaterial erstreckt sich materialeinheitlich durch die Durchgangslöcher DL hindurch und, durch die Versteifungsrippen 11, über mehrere Durchgangslöcher DL hinweg. So wird eine besonders sichere Verbindung der beiden Organoblechstücke 10A, 10B erzielt.

Weil die Organoblechstücke 10A, 10B besonders sicher aneinander befestigt sind, kann der Überlappungsbereich UB vergleichsweise klein ausgebildet werden. Hierdurch können nicht unerhebliche Mengen an Organoblech eingespart werden. zudem ist so eine verbesserte, bedarfsgerechte Anpassung der Stabilität des Strukturbauteils 1' bei möglichst niedrigem Gewicht möglich.

Optional werden die Organoblechstücke 10A, 10B (z.B. gleichzeitig mit dem Spritznähen) warmverpresst (insbesondere in einem schmelzflüssigen Zustand), um eine noch weiter verbesserte Befestigung der Organoblechstücke 10A, 10B aneinander zu erzielen.

In den Fig. 1A bis 2D wurde jeweils die Verbindung von zwei Organoblechstücken 10A, 10B gezeigt. Selbstverständlich ist es jedoch auch möglich, mehr als zwei Organoblechstücke 10A, 10B auf die beschriebene Weise miteinander zu verbinden. Dabei ist es auch möglich, Durchgangslöcher durch mehr als zwei Lagen von übereinanderliegenden Organoblechstücken zu stechen, z.B. durch drei oder mehr übereinanderliegende Organoblechstücke.

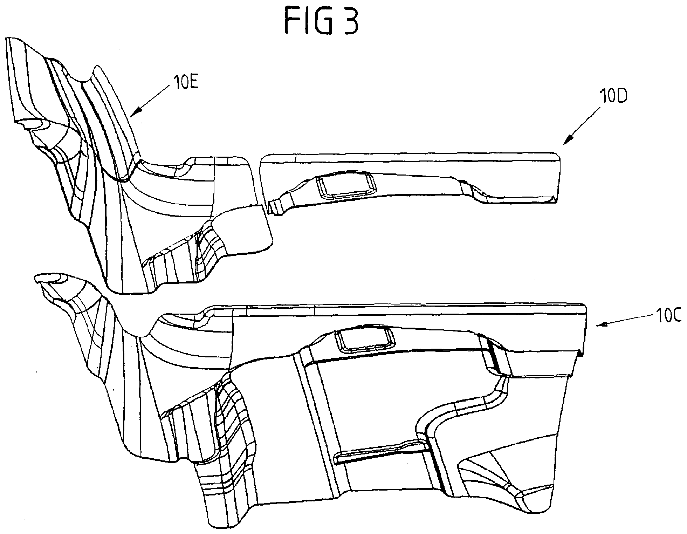

Fig. 3 zeigt ein weiteres Ausführungsbeispiel von mehreren Organoblechstücken, hier drei Organoblechstücken 10C-10E.

Die Organoblechstücke 10C-10E sind gemäß Fig. 3 bereits vorgeformt, d.h. durch Umformen (insbesondere Thermoformen) aus einem jeweils ebenen Organoblechstück hergestellt worden.

Die Organoblechstücke 10C-10E sind dazu ausgebildet, gemeinsam ein Strukturbauteil 1" in Form eines Teils eines Türinnenblechs eines Kraftfahrzeugs auszubilden. Die Organoblechstücke 10C-10E weisen voneinander verschiedene Eigenschaften auf. Die einzelnen Die Organoblechstücke 10C-10E sind hierbei an die Anforderungen an das Strukturbauteils 1" an denjenigen Bereich angepasst, der durch das jeweilige Organoblechstück 10C-10E ausgebildet wird.

Ein erstes Organoblechstück 10C bildet im fertigen Strukturbauteil 1" einen flächigen Abschnitt, z.B. einen Teil eines Aggregateträgers, und ist aus einem (dünnen) Organoblech, vorliegend mit einer Stärke von 0,6 mm, hergestellt. Ein zweites Organoblechstück 10D bildet im fertigen Strukturbauteil 1" einen Teil eines waagrechten Trägers des Türinnenblechs. Das zweite Organoblechstück 10D aus einem mittelstarken Organoblech hergestellt, vorliegend mit einer Stärke vom 1,0 mm. Ein drittes Organoblechstück 10E bildet im fertigen Strukturbauteil 1" einen Teil eines Holms des Türinnenblechs. Der Holm muss besonders starken Belastungen standhalten. Daher ist das erste Organoblechstück 10C aus einem starken Organoblech hergestellt, im vorliegenden Beispiel mit einer Stärke von 1,5 mm

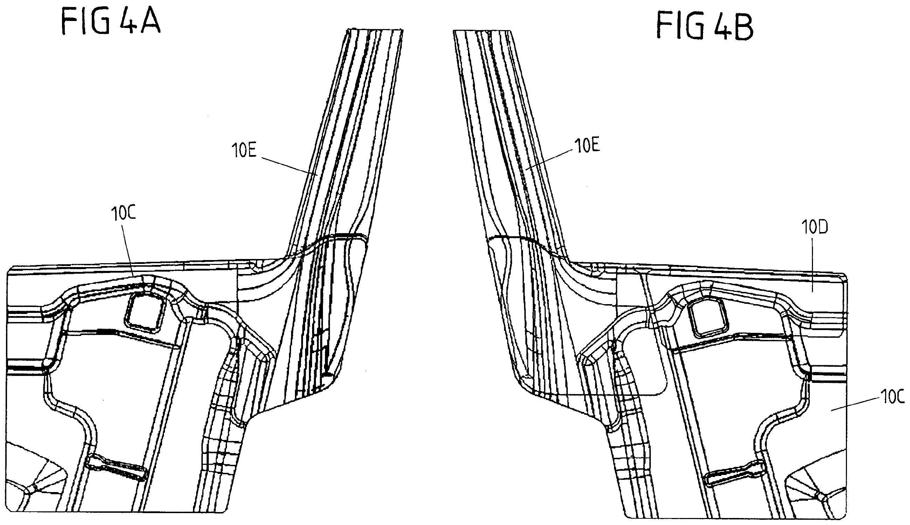

Die Fig. 4A und 4B zeigen die Organoblechstücke 10C-10E in einem Zustand, in dem die übereinanderliegend angeordnet sind. Dabei überlappen das erste Organoblechstück 10C und das (kleinere) zweite Organoblechstück 10D über die gesamte Fläche des zweiten Organoblechstücks 10D. Das zweite Organoblechstück 10D verstärkt somit das erste Organoblechstück 10C. Das erste Organoblechstück 10C und das (kleinere) dritte Organoblechstück 10E überlappen teilweise. Das zweite und das dritte Organoblechstück 10D, 10E überlappen nicht.

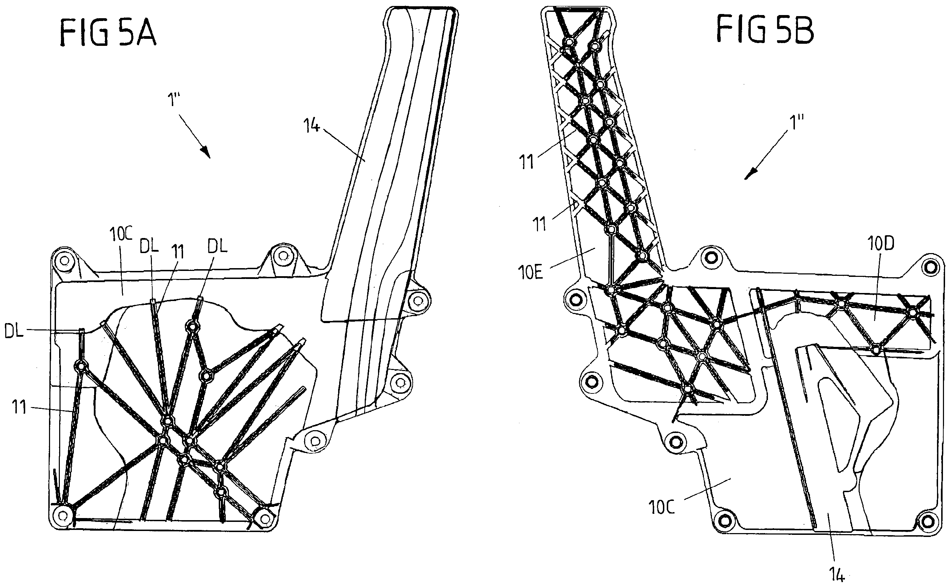

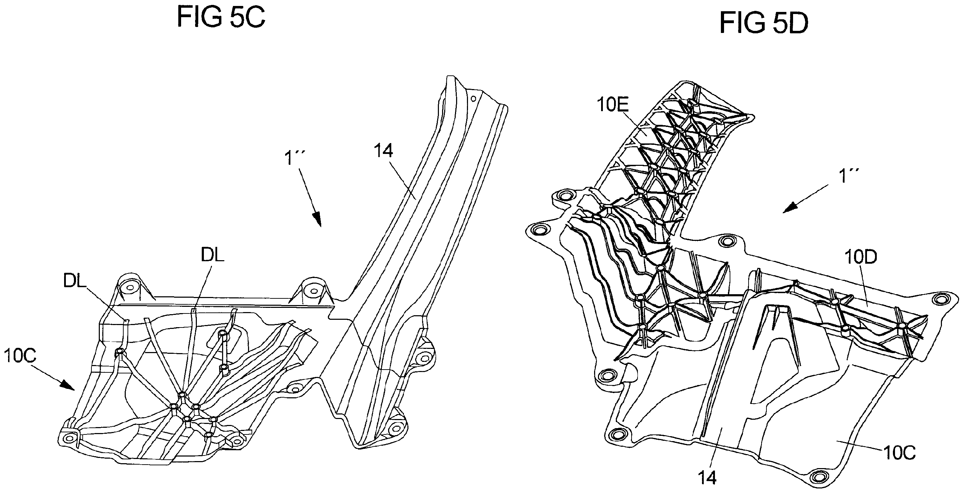

Fig. 5A bis 5D zeigen das fertige Strukturbauteil 1". Die drei Organoblechstücke 10C-10E sind durch Spritznähen aneinander befestigt. Eine Vielzahl von Durchgangslöchern DL verbindet das erste mit dem zweiten Organoblechstück 10C, 10D und das erste mit dem dritten Organoblechstück 10C, 10E.

Ein Netz von Versteifungsrippen 11 ist auf beiden Seiten des Strukturbauteils 1" ausgebildet.

Die Ränder der Organoblechstücke 10C-10E sind mit Spritzgussmaterial umspritzt. Hierdurch können die Faserschichten der Organoblechstücke 10C-10E geschützt werden. Optionale Ösen oder andere Verbindungselemente sind an das Strukturbauteil 1" angespritzt. Sämtliche angespritzten Abschnitte können ohne Hinterschnitte ausgebildet sein, was eine einfache Herstellung ermöglicht.

Ferner sind flächig überspritzte Bereiche 14 ausgebildet, und zwar im vorliegenden Beispiel an einem nach außen sichtbaren Abschnitt des Strukturbauteils 1", hier am Holm. Ein weiterer flächig überspritzter Bereich ist in Form (zumindest eines Teils) einer Führungsschiene für einen Fensterheber ausgebildet. Insbesondere nach außen sichtbare Oberflächen können durch entsprechendes Spritzgießen mit einer Oberflächenstruktur, z.B. einer Narbung versehen sein.

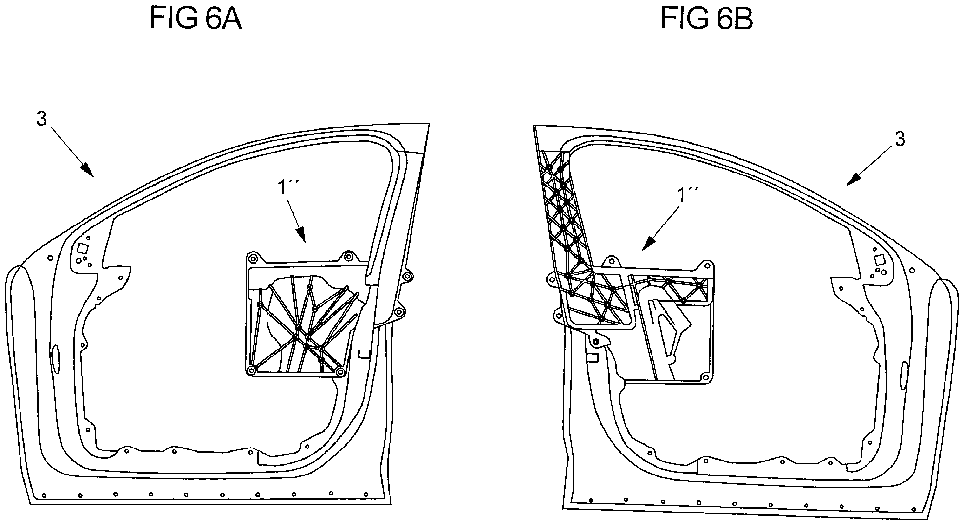

Die Fig. 6A und 6B zeigen ein Türinnenblech 3 für eine Fahrzeugtür, wobei das Strukturbauteil 1" gemäß Fig. 5A-5D einen Teil des Türinnenblechs 3 bildet. Das Strukturbauteil stellt eine strukturgebende Funktion bereit (und im gezeigten Beispiel auch eine tragende Funktion).

Im in den Fig. 6A und 6B gezeigten Beispiel ist das Strukturbauteil 1" mit einem Metallblech verbunden, z.B. verschraubt, welches das übrige Türinnenblech 3 ausbildet. Alternativ sind auch die übrigen Teile des Türinnenblechs 3 in Form einer wie hierin beschriebenen Strukturbaugruppe hergestellt.

Die gezeigte Ausbildung der Strukturbaugruppe 1" gemäß Fig. 5A-5D ist nur exemplarisch. Beispielsweise könnte die Strukturbaugruppe das gesamte Türinnenblech ausbilden. Hierzu kann eine Vielzahl von Organoblechstücken durch Spritznähen miteinander verbunden werden.

### Bezugszeichenliste

- 1, 1', 1": Strukturbauteil
- 10A-10E: Organoblechstück
- 100: Faserschicht
- 101: Loch
- 102: Matrix
- 11: Füllung
- 12: Verstärkungsrippe
- 13: Halteteil
- 14: flächig überspritzter Bereich
- 2: Dorn
- 3: Türinnenblech
- 4: Spritzgusswerkzeug
- 20: Spitze
- DL: Durchgangsloch
- UB: Überlappungsbereich

## Patentansprüche

1. Strukturbauteil (1, 1', 1"), umfassend zumindest zwei Organoblechstücke (10A-10E), die zumindest abschnittsweise übereinanderliegen und die jeweils eine Faserschicht (100) aufweisen, **dadurch gekennzeichnet, dass** zumindest in den Faserschichten (100) der Organoblechstücke (10A-10E) mindestens ein Paar von miteinander fluchtenden Löchern (101) ausgebildet ist, an denen die Organoblechstücke (10A-10E) formschlüssig miteinander verbunden sind, und zwar durch einen Formschluss der Organoblechstücke (10A-10E) miteinander, wobei die formschlüssige Verbindung zwischen den Faserschichten (100) der Organoblechstücke (10A-10E) ausgebildet ist.

2. Strukturbauteil (1, 1', 1") nach Anspruch 1, **dadurch gekennzeichnet, dass** sich eine Füllung (11) durch das mindestens eine Paar von miteinander fluchtenden Löchern (101) hindurch erstreckt.

3. Strukturbauteil (1, 1', 1") nach Anspruch 2, **dadurch gekennzeichnet, dass** die Füllung (11) dasselbe Material umfasst oder aus demselben Material besteht wie eine Matrix (102) zumindest eines der Organoblechstücke (10A-10E).

4. Strukturbauteil (1, 1', 1") nach Anspruch 2 oder 3, **dadurch gekennzeichnet, dass** sich die Füllung (11) durch das Paar von miteinander fluchtenden Löchern (101) hindurch erstreckt und beiderseits der einander überlappenden Organoblechstücke (10A-10E) einstückig mit jeweils einem Halteteil (13) verbunden ist, das einen größeren Durchmesser aufweist, als die miteinander fluchtenden Löcher (101).

5. Strukturbauteil (1, 1', 1") nach einem der vorhergehenden Ansprüche, **dadurch gekennzeichnet, dass** eine Vielzahl von miteinander fluchtenden Löchern (101) vorgesehen ist, die jeweils zumindest in den Faserschichten (100) der Organoblechstücke (10A-10E) ausgebildet sind.

6. Strukturbauteil (1, 1', 1") nach einem der vorhergehenden Ansprüche, **dadurch gekennzeichnet, dass** zwischen zumindest zwei Paaren von miteinander fluchtenden Löchern (101) eine Verstärkungsrippe (12) ausgebildet ist.

7. Strukturbauteil (1, 1', 1") nach einem der vorhergehenden Ansprüche, **dadurch gekennzeichnet, dass** zwischen zumindest zwei Paaren von miteinander fluchtenden Löchern (101) beiderseits der übereinanderliegen Organoblechstücke (10A-10E) jeweils zumindest eine Verstärkungsrippe (12) ausgebildet ist.

8. Verfahren zur Herstellung eines Strukturbauteils (1, 1', 1"), umfassend die folgenden Schritte:
- Bereitstellen von zumindest zwei Organoblechstücken (10A-10E), die jeweils eine Faserschicht (100) aufweisen;
- Anordnen der Organoblechstücke (10A-10E) derart, dass sie zumindest abschnittsweise übereinanderliegen; und
- Einbringen zumindest eines sich durch die zumindest zwei Organoblechstücke (10A-10E) hindurch erstreckenden Durchgangslochs (DL) in die Organoblechstücke (10A-10E) zur Bildung einer formschlüssigen Verbindung der Organoblechstücke (10A-10E) durch einen Formschluss der Organoblechstücke (10A-10E) miteinander am Durchgangsloch (DL), **dadurch gekennzeichnet, dass** die formschlüssige Verbindung zwischen den Faserschichten (100) der Organoblechstücke (10A-10E) ausgebildet ist.

9. Verfahren nach Anspruch 8, **dadurch gekennzeichnet, dass** das zumindest eine sich durch die zwei Organoblechstücke (10A-10E) hindurch erstreckende Durchgangsloch (DL) in einem erwärmten Zustand der Organoblechstücke (10A-10E) eingebracht wird.

10. Verfahren nach Anspruch 8 oder 9, **dadurch gekennzeichnet, dass** das zumindest eine sich durch die zwei Organoblechstücke (10A-10E) hindurch erstreckende Durchgangsloch (DL) mittels eines Dorns (2) in die Organoblechstücke (10A-10E) gestochen wird.

11. Verfahren nach einem der Ansprüche 8 bis 10, **dadurch gekennzeichnet, dass** ein Spritzgussmaterial an die Organoblechstücke (10A-10E) angespritzt wird, wobei das zumindest eine sich durch die Organoblechstücke (10A-10E) hindurch erstreckende Durchgangsloch (DL) mit einer Füllung (11) aus Spritzgussmaterial aufgefüllt wird.

12. Verfahren nach einem der Ansprüche 8 bis 11, **dadurch gekennzeichnet, dass** zumindest zwei sich jeweils durch die Organoblechstücke (10A-10E) hindurch erstreckende Durchgangslöcher (DL) in die Organoblechstücke (10A-10E) eingebracht werden.

13. Verfahren nach Anspruch 12, **dadurch gekennzeichnet, dass** zumindest eine Verstärkungsrippe (12) an die Organoblechstücke (10A-10E) angespritzt wird, welche die zwei Durchgangslöcher (DL) miteinander verbindet.

14. Verfahren nach einem der Ansprüche 8 bis 13, ausgebildet zur Herstellung eines Strukturbauteils nach einem der Ansprüche 1 bis 7.

## Claims

1. A structural component (1, 1', 1"), comprising at least two organo-sheet pieces (10A-10E) which at least sectionally lie one on top of the other and which each include a fiber layer (100), **characterized in that** at least in the fiber layers (100) of the organo-sheet pieces (10A-10E) at least one pair of mutually aligned holes (101) is formed, at which the organo-sheet pieces (10A-10E) are positively connected to each other, namely by a form fit of the organo-sheet pieces with each other, wherein the positive connection is formed between the fiber layers (100) of the organo-sheet pieces (10A-10E).

2. The structural component (1, 1', 1") according to claim 1, **characterized in that** a filling (11) extends through the at least one pair of mutually aligned holes (101).

3. The structural component (1, 1', 1") according to claim 2, **characterized in that** the filling (11) comprises the same material or consists of the same material as a matrix (102) of at least one of the organo-sheet pieces (10A-10E).

4. The structural component (1, 1', 1") according to claim 2 or 3, **characterized in that** the filling (11) extends through the pair of mutually aligned holes (101) and on both sides of the organo-sheet pieces (10A-10E) overlapping each other is integrally connected to one holding part (13) each, which has a larger diameter than the mutually aligned holes (101).

5. The structural component (1, 1', 1") according to any of the preceding claims, **characterized in that** a plurality of mutually aligned holes (101) is provided, which each are formed at least in the fiber layers (100) of the organo-sheet pieces (10A-10E).

6. The structural component (1, 1', 1") according to any of the preceding claims, **characterized in that** between at least two pairs of mutually aligned holes (101) a reinforcing rib (12) is formed.

7. The structural component (1, 1', 1") according to any of the preceding claims, **characterized in that** between at least two pairs of mutually aligned holes (101) at least one reinforcing rib (12) each is formed on both sides of the superimposed organo-sheet pieces (10A-10E).

8. A method for manufacturing a structural component (1, 1', 1"), comprising the following steps:
- providing at least two organo-sheet pieces (10A-10E) which each include a fiber layer (100);
- arranging the organo-sheet pieces (10A-10E) in such a way that they at least sectionally lie one on top of the other; and
- incorporating at least one through hole (DL) extending through the at least two organo-sheet pieces (10A-10E) into the organo-sheet pieces (10A-10E) to form a positive connection of the organo-sheet pieces (10A-10E) by a form fit of the organo-sheet pieces with each other at the through hole (DL),
**characterized in that** the positive connection is formed between the fiber layers (100) of the organo-sheet pieces (10A-10E).

9. The method according to claim 8, **characterized in that** the at least one through hole (DL) extending through the two organo-sheet pieces (10A-10E) is incorporated in a heated state of the organo-sheet pieces (10A-10E).

10. The method according to claim 8 or 9, **characterized in that** the at least one through hole (DL) extending through the two organo-sheet pieces (10A-10E) is punched into the organo-sheet pieces (10A-10E) by means of a spike (2).

11. The method according to any of claims 8 to 10, **characterized in that** an injection molding material is molded to the organo-sheet pieces (10A-10E), wherein the at least one through hole (DL) extending through the organo-sheet pieces (10A-10E) is filled up with a filling (11) of injection molding material.

12. The method according to any of claims 8 to 11, **characterized in that** at least two through holes (DL) each extending through the organo-sheet pieces (10A-10E) are incorporated into the organo-sheet pieces (10A-10E).

13. The method according to claim 12, **characterized in that** at least one reinforcing rib (12) is injection-molded to the organo-sheet pieces (10A-10E), which connects the two through holes (DL) to each other.

14. The method according to any of claims 8 to 13, designed for manufacturing a structural component according to any of claims 1 to 7.

## Revendications

1. Composant structural (1, 1', 1"), comprenant au moins deux pièces en tôle organique (10A - 10E), qui sont situées au moins par endroits l'une au-dessus de l'autre et qui présentent respectivement une couche de fibres (100), **caractérisé en ce qu'**est réalisée, au moins dans les couches de fibres (100) des pièces en tôle organique (10A-10E), au moins une paire de trous (101) alignés les uns avec les autres, sur lesquels les pièces en tôle organique (10A-10E) sont reliées les unes aux autres par complémentarité de forme, à savoir par une complémentarité de forme des pièces en tôle organique (10A-10E), dans lequel la liaison par complémentarité de forme est réalisée entre les couches de fibres (100) des pièces en tôle organique (10A-10E).

2. Composant structural (1, 1', 1") selon la revendication 1, **caractérisé en ce qu'**un remplissage (11) s'étend à travers l'au moins une paire de trous (101) alignés les uns avec les autres de part en part.

3. Composant structural (1, 1', 1") selon la revendication 2, **caractérisé en ce que** le remplissage (11) comprend le même matériau ou est constitué du même matériau qu'une matrice (102) d'au moins une des pièces en tôle organique (10A-10E).

4. Composant structural (1, 1', 1") selon la revendication 2 ou 3, **caractérisé en ce que** le remplissage (11) s'étend à travers la paire de trous (101) alignés les uns avec les autres de part en part et est relié, de part et d'autre des pièces en tôle organique (10A-10E) se chevauchant les unes les autres, d'un seul tenant à respectivement une partie de maintien (13), qui présente un diamètre plus grand que les trous (101) alignés les uns avec les autres.

5. Composant structural (1, 1', 1") selon l'une quelconque des revendications précédentes, **caractérisé en ce qu'**est prévue une pluralité de trous (101) alignés les uns avec les autres, lesquels sont réalisés respectivement au moins dans les couches de fibres (100) des pièces en tôle organique (10A-10E).

6. Composant structural (1, 1', 1") selon l'une quelconque des revendications précédentes, **caractérisé en ce qu'**une nervure de renforcement (12) est réalisée entre au moins deux paires de trous (101) alignés les uns avec les autres.

7. Composant structural (1, 1', 1") selon l'une quelconque des revendications précédentes, **caractérisé en ce que** respectivement au moins une nervure de renforcement (12) est réalisée entre au moins deux paires de trous (101) alignés les uns avec les autres de part et d'autre des pièces en tôle organique (10A-10E) situées les unes au-dessus des autres.

8. Procédé de fabrication d'un composant structural (1, 1', 1") comprenant les étapes suivantes :
- de fourniture d'au moins deux pièces en tôle organique (10A-10E), qui présentent respectivement une couche de fibres (100) ;
- d'agencement des pièces en tôle organique (10A-10E) de telle manière qu'elles sont situées les unes au-dessus des autres au moins par endroits ; et
- e réalisation d'au moins un trou de passage (DL) s'étendant à travers les au moins deux pièces en tôle organique (10A-10E) de part en part dans les pièces en tôle organique (10A-10E) pour former une liaison par complémentarité de forme entre les pièces en tôle organique (10A-10E) par une complémentarité de forme des pièces en tôle organique (10A-10E) les unes aux autres sur le trou de passage (DL), **caractérisé en ce que** la liaison par complémentarité de forme est réalisée entre les couches de fibres (100) des pièces en tôle organique (10A-10E).

9. Procédé selon la revendication 8, **caractérisé en ce que** l'au moins un trou de passage (DL) s'étendant à travers les deux pièces en tôle organique (10A-10E) de part en part est pratiqué dans un état réchauffé des pièces en tôle organique (10A-10E).

10. Procédé selon la revendication 8 ou 9, **caractérisé en ce que** l'au moins un trou de passage (DL) s'étendant à travers les deux pièces en tôle organique (10A-10E) de part en part est percé dans les pièces en tôle organique (10A-10E) au moyen d'un mandrin (2).

11. Procédé selon l'une quelconque des revendications 8 à 10, **caractérisé en ce qu'**un matériau coulé par injection est appliqué par injection sur les pièces en tôle organique (10A-10E), dans lequel l'au moins un trou de passage (DL) s'étendant à travers les pièces en tôle organique (10A-10E) de part en part est rempli d'un remplissage (11) en matériau coulé par injection.

12. Procédé selon l'une quelconque des revendications 8 à 11, **caractérisé en ce qu'**au moins deux trous de passage (DL) s'étendant respectivement à travers les pièces en tôle organique (10A-10E) de part en part sont pratiqués dans les pièces en tôle organique (10A-10E).

13. Procédé selon la revendication 12, **caractérisé en ce qu'**au moins une nervure de renforcement (12) est appliquée par injection sur les pièces en tôle organique (10A-10E), laquelle relie les deux trous de passage (DL) l'un à l'autre.

14. Procédé selon l'une quelconque des revendications 8 à 13, réalisé pour fabriquer un composant structural selon l'une quelconque des revendications 1 à 7.
